# FASCICULE DE BREVET EUROPEEN

(11) **EP 2 718 121 B1**
(45) Date de publication et mention de la délivrance du brevet: **09.12.2015**
(21) Numéro de dépôt: 12729063.3
(22) Date de dépôt: 06.06.2012
(51) Int. Cl.: B60C 15/00, B60C 15/06

(54) **BOURRELET DE PNEUMATIQUE POUR VEHICULE LOURD DE TYPE GENIE CIVIL**
REIIFENWULST FÜR SCHWERLASTFAHRZEUG BAUMASCHINENART
TYRE BEAD FOR HEAVY DUTY CONSTRUCTION VEHICLE

(30) Priorité: 07.06.2011 FR 1154930
(43) Date de publication de la demande: 16.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONDU, Lucien, F-63040 Clermont-Ferrand Cedex 9 (FR)
(74) Mandataire: Millanvois, Patrick Jacques Jean
(86) Numéro de dépôt international: PCT/EP2012/060648
(87) Numéro de publication internationale: WO 2012/168271

(56) Documents cités:
- EP-A1- 1 350 639
- FR-A1- 2 776 238
- JP-A- 2004 345 414

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend deux bourrelets, assurant la liaison mécanique entre le pneumatique et la jante sur laquelle il est monté, les bourrelets étant réunis respectivement par l'intermédiaire de deux flancs à une bande de roulement, destinée à venir en contact avec le sol par l'intermédiaire d'une surface de roulement.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques sont sensiblement parallèles entre eux et font, avec la direction circonférentielle, un angle compris entre 85° et 95°. La couche d'armature de carcasse comprend une partie principale, reliant les deux bourrelets entre eux et s'enroulant, dans chaque bourrelet, autour d'une tringle. La tringle comprend un élément de renforcement circonférentiel le plus souvent métallique entouré d'au moins un matériau, de manière non exhaustive, polymérique ou textile. L'enroulement de la couche d'armature de carcasse autour de la tringle va de l'intérieur vers l'extérieur du pneumatique pour former un retournement, comprenant une extrémité. Le retournement, dans chaque bourrelet, permet l'ancrage de la couche d'armature de carcasse à la tringle du bourrelet.

Chaque bourrelet comprend un élément de remplissage prolongeant radialement vers l'extérieur la tringle. L'élément de remplissage est constitué d'au moins un matériau polymérique de remplissage. L'élément de remplissage peut être constitué d'un empilage dans le sens radial d'au moins deux matériaux polymériques de remplissage en contact suivant une surface de contact coupant tout plan méridien selon une trace méridienne. L'élément de remplissage sépare axialement la partie principale et le retournement.

Chaque bourrelet comprend également un élément de protection prolongeant radialement vers l'intérieur le flanc et axialement extérieur au retournement. L'élément de protection est également au moins en partie en contact par sa face axialement extérieure avec le rebord de la jante. L'élément de protection est constitué d'au moins un matériau polymérique de protection.

Chaque bourrelet comprend enfin un élément de bourrage axialement intérieur au flanc et à l'élément de protection et axialement extérieur au retournement. L'élément de bourrage est constitué d'au moins un matériau polymérique de bourrage.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange polymérique, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des variations de courbure combinées avec des variations de tension des éléments de renforcement métalliques de la partie principale et du retournement.

Considérant qu'un bourrelet se comporte mécaniquement comme une poutre en flexion dont les fibres respectivement extérieure et intérieure sont la partie principale et le retournement, le retournement, soumis aux cycles de flexion, subit des déformations de compression, susceptibles d'entraîner sa rupture par fatigue, et donc une diminution de l'endurance du bourrelet et de la durée de vie du pneumatique.

Le document EP 2 216 189 décrit un bourrelet de pneumatique dont l'endurance est améliorée par une réduction des déformations de compression dans le retournement, lors de la flexion du bourrelet sur la jante, en utilisation. Cet objectif est atteint grâce à un retournement tel que la distance entre le retournement et la partie principale décroît continûment, radialement vers l'extérieur, à partir de la tringle, jusqu'à une distance minimale, puis augmente continûment jusqu'à une distance maximale. Le retournement s'étend radialement à l'extérieur du point du retournement correspondant à la distance maximale entre le retournement et la partie principale.

Les cycles de flexion entraînent également des contraintes et déformations principalement de cisaillement et de compression, dans les matériaux polymériques d'enrobage et de bourrage, sur la face axialement extérieure du retournement, en raison de la flexion du bourrelet sur le rebord de jante.

En particulier, dans la zone d'enroulement du bourrelet sur le rebord de jante, les cycles de flexion initient des fissures sur la face axialement extérieure du retournement. Ces fissures se propagent dans le matériau polymérique d'enrobage puis dans le matériau polymérique de bourrage dans lequel elles forment des cavités susceptibles d'entraîner, dans la durée, une dégradation du pneumatique nécessitant son remplacement. La vitesse de propagation des fissures dépend d'une part de l'amplitude et de la fréquence des cycles de contraintes et de déformations, d'autre part des rigidités des matériaux polymériques, dans la zone de fissuration.

Le document JP 2004345414,qui divulgue un pneumatique selon le préambule de la revendication 1, a déjà décrit, dans le cas d'un pneumatique à armature de carcasse radiale, des bourrelets dont la conception a pour objectif la prévention de fissures générées dans la zone de recouvrement entre le retournement et l'extrémité radialement extérieure d'une couche d'éléments de renforcements métalliques entourant la partie radialement intérieure de la tringle. Dans la solution technique proposée, un élément de matériau polymérique est intercalé entre le retournement et l'extrémité radialement extérieure de la couche d'éléments de renforcements métalliques entourant la partie radialement intérieure de la tringle.

Les inventeurs se sont donnés pour objectif d'améliorer l'endurance des bourrelets d'un pneumatique radial pour véhicule lourd de type génie civil, en diminuant la fissuration initiée sur la face axialement extérieure du retournement et se propageant à travers les matériaux polymériques d'enrobage et de bourrage.

Cet objectif a été atteint, selon l'invention, par :
- un pneumatique pour véhicule lourd de type génie civil comprenant deux bourrelets destinés à entrer en contact avec une jante comprenant deux rebords de jante au moins en partie circulaires,
- une armature de carcasse comprenant au moins une couche d'armature de carcasse constituée d'éléments de renforcement métalliques enrobés par un matériau polymérique d'enrobage,
- la couche d'armature de carcasse comprenant une partie principale s'enroulant dans chaque bourrelet, de l'intérieur vers l'extérieur du pneumatique, autour d'une tringle pour former un retournement,
- la distance entre le retournement et la partie principale décroissant continûment, radialement vers l'extérieur, à partir de la tringle, jusqu'à une distance minimale, puis augmentant continûment jusqu'à une distance maximale,
- chaque bourrelet comprenant un élément de protection prolongeant radialement vers l'intérieur un flanc et un élément de bourrage axialement intérieur à l'élément de protection et au flanc et axialement extérieur au retournement,
- les éléments de protection et de bourrage étant respectivement constitués d'au moins un matériau polymérique de protection et d'un matériau polymérique de bourrage,
- le matériau polymérique de bourrage ayant un module d'élasticité à 10% d'allongement inférieur au module d'élasticité à 10% d'allongement du matériau polymérique d'enrobage,
- un élément de transition, constitué d'un matériau polymérique de transition, étant en contact, par sa face axialement intérieure, avec le matériau polymérique d'enrobage de la face axialement extérieure du retournement et, par sa face axialement extérieure, avec le matériau polymérique de bourrage,
- et le module d'élasticité à 10% d'allongement du matériau polymérique de transition étant intermédiaire entre les modules d'élasticité à 10% d'allongement respectifs du matériau polymérique d'enrobage et du matériau polymérique de bourrage.

Selon l'invention, il est avantageux d'avoir un élément de transition, constitué d'un matériau polymérique de transition, en contact, par sa face axialement intérieure, avec le matériau polymérique d'enrobage de la face axialement extérieure du retournement et, par sa face axialement extérieure, avec le matériau polymérique de bourrage. En effet, l'adjonction d'un élément de transition permet de réaliser un gradient de rigidités et de limiter localement les niveaux de contraintes et de déformations dont dépend la vitesse de propagation des fissures initiées sur la face axialement extérieure du retournement et se propageant à travers les matériaux polymériques d'enrobage et de bourrage.

Le module d'élasticité à 10% d'allongement du matériau polymérique de transition est avantageusement intermédiaire entre les modules d'élasticité à 10% d'allongement respectifs du matériau polymérique d'enrobage et du matériau polymérique de bourrage avec lequel l'élément de transition est en contact. La décroissance progressive des modules d'élasticité à 10% d'allongement quand on passe successivement du matériau polymérique d'enrobage au matériau polymérique de transition, puis au matériau polymérique de bourrage permet un gradient décroissant et progressif de rigidités, qui permet de diminuer les contraintes et déformations sur la face axialement extérieure du retournement et, par conséquent, de ralentir la propagation des fissures.

Un module d'élasticité à 10% d'allongement du matériau polymérique de transition intermédiaire apporte un avantage d'autant plus significatif que l'écart entre les modules d'élasticité à 10% d'allongement respectifs du matériau polymérique d'enrobage et du matériau polymérique de bourrage est important. Dans l'exemple du pneumatique selon l'invention étudié, le module d'élasticité à 10% d'allongement du matériau polymérique d'enrobage est égal à 1.6 fois le module d'élasticité à 10% d'allongement du matériau polymérique de bourrage.

Il est également avantageux d'avoir l'extrémité radialement extérieure de l'élément de transition radialement extérieure à la droite passant par le centre du cercle du rebord de jante et faisant un angle de +70° par rapport à la direction axiale.

Il est encore avantageux d'avoir l'extrémité radialement intérieure de l'élément de transition radialement intérieure à la droite passant par le centre du cercle du rebord de jante et faisant un angle de +40° par rapport à la direction axiale.

La jante d'un pneumatique comprenant deux rebords de jante symétriques par rapport au plan équatorial du pneumatique et chaque rebord de jante comprenant dans sa partie radialement la plus extérieure une portion circulaire, on définit, pour chaque rebord de jante, un repère local dont l'origine est le centre du cercle du rebord de jante et dont les axes sont deux droites passant par le centre du cercle du rebord de jante et respectivement orientées axialement vers l'intérieur du pneumatique et radialement vers l'extérieur du pneumatique.

L'angle d'une droite passant par le centre du cercle du rebord de jante par rapport à la direction axiale est l'angle de cette droite avec la droite de direction axiale passant par le centre du cercle du rebord de jante et orientée vers l'intérieur du pneumatique. Cet angle est positif si on passe de la droite passant par le centre du cercle du rebord de jante et orientée axialement vers l'intérieur du pneumatique à ladite droite par une rotation de sens trigonométrique.

Les positionnements géométriques des extrémités de l'élément de transition sont mesurés sur un pneumatique monté sur sa jante, c'est-à-dire gonflé à la pression minimale assurant le positionnement correct des bourrelets du pneumatique par rapport aux rebords de jante. A titre d'exemple, cette pression minimale peut être égale à 10% de la pression nominale de gonflage telle que spécifiée par la norme ETRTO.

Les inventeurs ont montré que la zone de sensibilité à la fissuration sur la face axialement extérieure du retournement d'armature de carcasse était comprise entre les droites passant par le centre du cercle du rebord de jante et faisant respectivement un angle minimum égal à +40° et un angle maximum égal à +70° par rapport à la direction axiale. C'est en effet la zone de compression et de cisaillement les plus élevés, lors de l'enroulement du bourrelet sur le rebord de jante sous la charge exercée sur le pneumatique. Par conséquent, l'élément de transition doit au moins couvrir cette zone de sensibilité à la fissuration sur la face axialement extérieure du retournement, en tenant compte des tolérances de positionnement de l'élément de transition par rapport au retournement inhérentes au procédé de fabrication.

Selon un mode de réalisation avantageux de l'invention, l'épaisseur de l'élément de transition est au moins égale à l'épaisseur du matériau polymérique d'enrobage.

On appelle épaisseur de l'élément de transition, l'épaisseur constante de l'élément de transition mesurée en dehors des zones d'effilement aux extrémités de l'élément de transition.

On appelle épaisseur du matériau polymérique d'enrobage, l'épaisseur du matériau polymérique d'enrobage mesurée, sur la face axialement extérieure du retournement, à partir de et perpendiculairement à la génératrice axialement extérieure d'un élément cylindrique de renforcement métallique du retournement.

Cette épaisseur minimale de l'élément de transition permet d'établir un gradient de rigidités minimum, permettant de diminuer la vitesse de propagation des fissures.

L'épaisseur de l'élément de transition est avantageusement au plus égale à 5 fois l'épaisseur du matériau polymérique d'enrobage. En effet, la dissipation thermique du matériau polymérique de transition est supérieure à celle du matériau polymérique de bourrage, du fait de son module d'élasticité à 10% d'allongement plus élevé. Par conséquent, un volume de matériau polymérique de transition trop élevé entraîne une élévation de température du bourrelet dommageable à sa durée de vie, d'où l'importance de limiter l'épaisseur de l'élément de transition à une valeur maximale.

Un mode de réalisation avantageux de l'invention est d'avoir le module d'élasticité à 10% d'allongement du matériau polymérique de transition au moins égal à 0.9 fois et au plus égal 1.1 fois la moyenne arithmétique des modules d'élasticité à 10% d'allongement respectifs du matériau polymérique d'enrobage et du matériau polymérique de bourrage. Cet intervalle de valeurs pour le module d'élasticité à 10% d'allongement du matériau polymérique de transition garantit un gradient de rigidités minimum, quand on passe successivement du matériau polymérique d'enrobage, au matériau polymérique de transition puis au matériau polymérique de bourrage, donc une diminution significative de la vitesse de propagation des fissures.

Avantageusement, la distance maximale entre le retournement et la partie principale est au moins égale à 1.1 fois la distance minimale entre le retournement et la partie principale. Il en résulte que l'élément de remplissage, axialement compris entre le retournement et la partie principale, comprend un rétrécissement entraînant une proximité entre le retournement et la partie principale permettant au retournement de ne pas être mis en compression, lors du roulage du pneumatique.

Concernant l'ensemble monté comprenant un pneumatique pour véhicule lourd de type génie civil et une jante, le pneumatique étant monté sur la jante, il est avantageux, d'une part, que la distance du point du retournement, positionné à la distance minimale axialement à l'extérieur de la partie principale, à la ligne de référence de la jante soit au moins égale à 1.25 fois et au plus égale à 2.5 fois la distance du point le plus radialement extérieur de la jante à la ligne de référence de la jante, et, d'autre part, que la distance du point du retournement, positionné à la distance maximale axialement à l'extérieur de la partie principale, à la ligne de référence de la jante soit au moins égale à 2 fois et au plus égale à 4 fois la distance du point le plus radialement extérieur de la jante à la ligne de référence de la jante. La ligne de référence de la jante correspond usuellement, pour l'homme du métier, au diamètre au seat. La distance du point le plus radialement extérieur de la jante à la ligne de référence de la jante définit la hauteur du crochet de jante. Ces intervalles de positionnement radial des points du retournement respectivement le plus proche et le plus éloigné de la partie principale garantissent une optimisation des tensions et une absence de compression dans le retournement.

Avantageusement enfin, chaque bourrelet comprenant un élément de remplissage prolongeant radialement vers l'extérieur la tringle, l'élément de remplissage étant formé d'au moins deux matériaux polymériques de remplissage, un premier matériau polymérique de remplissage étant le plus radialement intérieur et en contact avec la tringle, un deuxième matériau polymérique de remplissage étant radialement extérieur au premier matériau polymérique de remplissage et ayant un module d'élasticité à 10% d'allongement inférieur au module d'élasticité à 10% d'allongement du premier matériau polymérique de remplissage, un élément de transition, constitué d'un matériau polymérique de transition, est en contact, par sa face radialement intérieure, avec le premier matériau polymérique de remplissage et en contact, par sa face radialement extérieure, avec le deuxième matériau polymérique de remplissage et le module d'élasticité à 10% d'allongement du matériau polymérique de transition est intermédiaire entre les modules d'élasticité à 10% d'allongement respectifs des premier et deuxième matériaux polymériques de remplissage. Cet élément de transition permet de diminuer la fissuration initiée au niveau de la surface de contact entre un premier matériau polymérique de remplissage le plus radialement intérieur et en contact avec la tringle et un deuxième matériau polymérique de remplissage radialement extérieur au premier matériau polymérique de remplissage. Ce gain en fissuration à l'interface entre les premier et deuxième matériaux polymériques de remplissage contribue à l'amélioration de l'endurance du borrelet et à l'augmentation de la durée de vie du pneumatique.

Les caractéristiques de l'invention seront mieux comprises à l'aide de la description des figures annexées 1 et 2 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon l'invention.

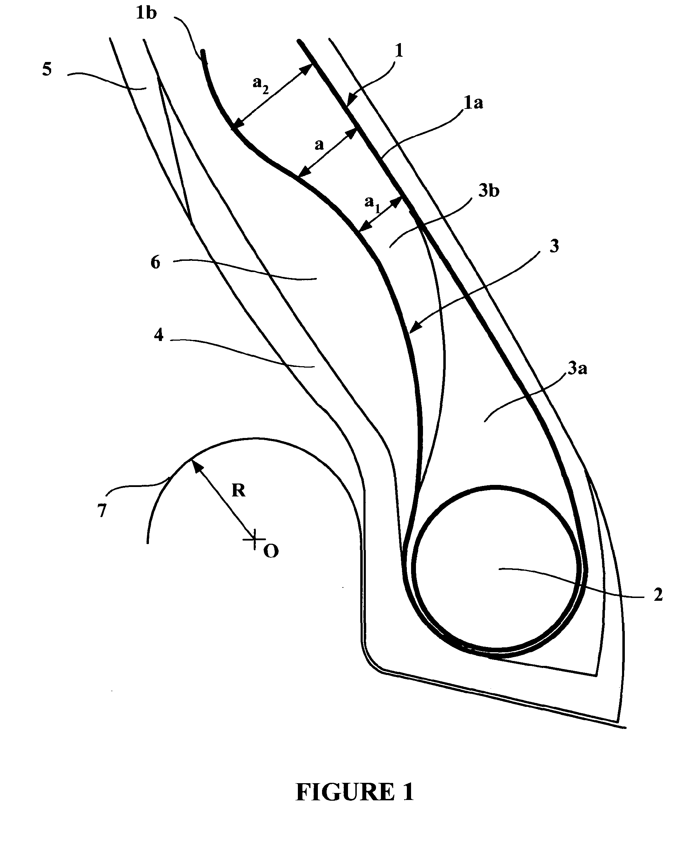

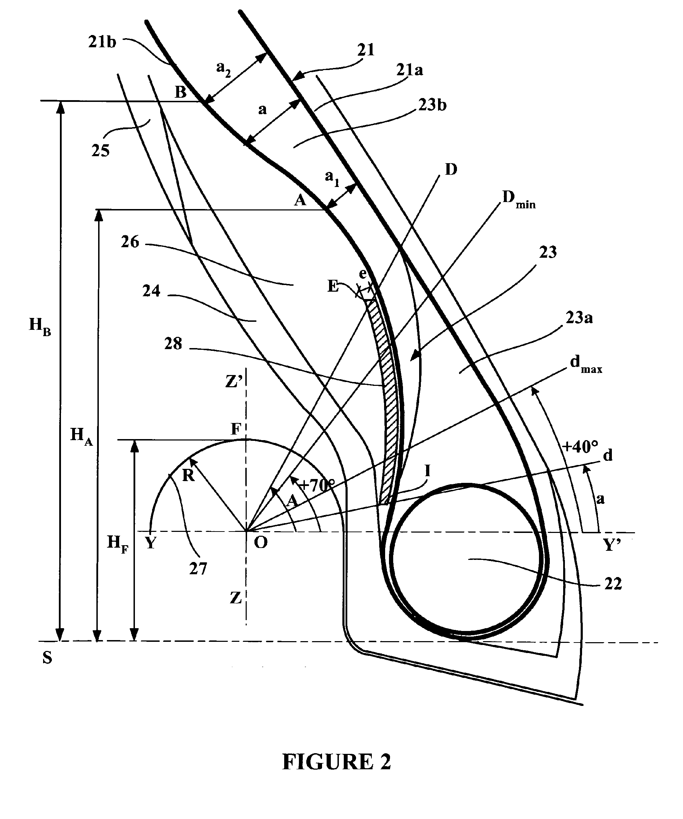

Les figures 1 et 2 ne sont pas représentées à l'échelle pour en faciliter la compréhension.

Sur la figure 1, est représenté un bourrelet de pneumatique pour véhicule lourd de type génie civil de l'état de la technique, comprenant :
- une armature de carcasse, comprenant une seule couche d'armature de carcasse 1 constituée d'éléments de renforcement métalliques enrobés par un matériau polymérique d'enrobage, avec une partie principale la s'enroulant, de l'intérieur vers l'extérieur du pneumatique, autour d'une tringle 2 pour former un retournement 1b,
- la distance a entre le retournement 1b et la partie principale 1a décroissant continûment, radialement vers l'extérieur, à partir de la tringle 2, jusqu'à une distance minimale a₁, puis augmentant continûment jusqu'à une distance maximale a₂,
- un élément de remplissage 3 prolongeant radialement vers l'extérieur la tringle 2, et étant constitué de deux matériaux polymériques de remplissage,
- un premier matériau polymérique de remplissage 3a étant radialement extérieur et en contact avec la tringle 2,
- un deuxième matériau polymérique de remplissage 3b étant radialement extérieur et en contact avec le premier matériau polymérique de remplissage 3a,
- un élément de protection 4 prolongeant radialement vers l'intérieur un flanc 5 et constitué d'au moins un matériau polymérique de protection,
- un élément de bourrage 6 axialement intérieur à l'élément de protection 4 et au flanc 5 et axialement extérieur au retournement 1b, et constitué d'un matériau polymérique de bourrage.

La figure 2 présente un bourrelet de pneumatique pour véhicule lourd de type génie civil, selon l'invention, comprenant :
- une armature de carcasse, comprenant une seule couche d'armature de carcasse 21 constituée d'éléments de renforcement métalliques enrobés par un matériau polymérique d'enrobage, avec une partie principale 21a s'enroulant, de l'intérieur vers l'extérieur du pneumatique, autour d'une tringle 22 pour former un retournement 21 b,
- la distance a entre le retournement 21b et la partie principale 21a décroissant continûment, radialement vers l'extérieur, à partir de la tringle 22, jusqu'à une distance minimale a₁, puis augmentant continûment jusqu'à une distance maximale a₂,
- un élément de remplissage 23 prolongeant radialement vers l'extérieur la tringle 22, et étant constitué de deux matériaux polymériques de remplissage,
- un premier matériau polymérique de remplissage 23a étant radialement extérieur et en contact avec la tringle 22,
- un deuxième matériau polymérique de remplissage 23b étant radialement extérieur et en contact avec le premier matériau polymérique de remplissage 23a,
- un élément de protection 24 prolongeant radialement vers l'intérieur un flanc 25 et constitué d'au moins un matériau polymérique de protection,
- un élément de bourrage 26 axialement intérieur à l'élément de protection 24 et au flanc 25 et axialement extérieur au retournement 21b, et constitué d'un matériau polymérique de bourrage.
- un élément de transition 28 en contact, par sa face axialement intérieure, avec le matériau polymérique d'enrobage de la face axialement extérieure du retournement et, par sa face axialement extérieure, avec le matériau polymérique de bourrage.

La géométrie du retournement 21b est caractérisée par le point A du retournement 21b, positionné à la distance minimale a₁, axialement à l'extérieur de la partie principale 21a, et à une distance H_{A}, radialement à l'extérieur d'une ligne de référence S de la jante 27, et par le point B du retournement 21b, positionné à la distance maximale a₂, axialement à l'extérieur de la partie principale 21a, et à une distance H_{B}, radialement à l'extérieur d'une ligne de référence S de la jante 27. Les positions respectives des points A et B sont définis par rapport au point F le plus radialement extérieur de la jante 27, positionné à une distance H_{F}, radialement à l'extérieur d'une ligne de référence S de la jante 27.

L'élément de transition 28 a une épaisseur e, représentée schématiquement constante, mais qui, en réalité, présente le plus souvent des effilements à ses extrémités respectivement radialement extérieure E et radialement intérieure I.

Le positionnement géométrique respectif des extrémités radialement extérieure E et radialement intérieure I de l'élément de transition 28 est défini par rapport au repère local dont l'origine est le centre O du cercle du rebord de jante 27 et dont les axes YY' et ZZ' sont deux droites passant par le centre O du cercle du rebord de jante et respectivement orientée axialement vers l'intérieur du pneumatique et radialement vers l'extérieur du pneumatique. L'angle d'une droite passant par le centre O du cercle du rebord de jante est alors positif si on passe de l'axe YY' à la droite par une rotation de sens trigonométrique.

Les extrémités radialement extérieure E et radialement intérieure I de l'élément de transition 28 sont situées respectivement sur les droites D et d, faisant les angles A et a avec l'axe YY'.

Les extrémités radialement extérieure E et radialement intérieure I de l'élément de transition 28 sont respectivement radialement extérieure à la droite Dₘᵢₙ, faisant un angle par rapport à l'axe YY' égal à +70°, et radialement intérieure à la droite dₘₐₓ, faisant un angle par rapport à l'axe YY' égal à +40°.

L'invention a été plus particulièrement étudiée dans le cas d'un pneumatique pour véhicule lourd de type dumper de dimension 59/80R63. Selon la norme ETRTO, les conditions nominales d'utilisation d'un tel pneumatique sont une pression de gonflage égale à 6 bars, une charge statique égale à 99 tonnes et une distance parcourue en une heure comprise entre 16 km et 32km.

Le pneumatique 59/80R63 a été conçu conformément à l'invention, telle que représentée sur la figure 2.

Concernant la géométrie du retournement 21b, le point A du retournement 21b est positionné à la distance minimale a₁ égale à 18 mm, axialement à l'extérieur de la partie principale 21a, et à une distance H_{A} égale à 200 mm, radialement à l'extérieur d'une ligne de référence S de la jante 27. Le point B du retournement 21b est positionné à la distance maximale a₂ égale à 27 mm, axialement à l'extérieur de la partie principale 21a, et à une distance H_{B} égale à 390 mm, radialement à l'extérieur d'une ligne de référence S de la jante 27. Les positions respectives des points A et B sont définis par rapport au point F le plus radialement extérieur de la jante 27, positionné à une distance H_{F} égale à 127 mm, radialement à l'extérieur d'une ligne de référence S de la jante 27.

L'angle A de la droite D passant par l'extrémité radialement extérieure E de l'élément de transition 28 est égale à +80°, donc supérieur à +70°.

L'angle a de la droite d passant par l'extrémité radialement intérieure I de l'élément de transition 28 est égale à +35°, donc inférieur à +40°.

L'épaisseur e de l'élément de transition 28 est égale à 1.5 mm, donc est comprise entre l'épaisseur du matériau polymérique d'enrobage égale à 1 mm et 5 fois l'épaisseur du matériau polymérique d'enrobage.

Les modules d'élasticité à 10% d'allongement des matériaux polymériques d'enrobage, de transition et de bourrage sont respectivement égaux à 6 MPa, 4.8 MPa et 3.5 MPa. Par conséquent, le module d'élasticité à 10% d'allongement du matériau polymérique de transition est égal à la moyenne arithmétique des modules d'élasticité à 10% d'allongement respectifs des matériaux polymériques d'enrobage et de bourrage.

Des simulations de calculs par éléments finis ont été réalisées respectivement sur un pneumatique de référence, tel que représenté sur la figure 1, et sur un pneumatique selon l'invention, tel que représenté sur la figure 2. Pour le pneumatique de référence, l'allongement du matériau polymérique de bourrage 6, dans la zone de sensibilité à la fissuration sur la face axialement extérieure du retournement 1b, est égal à 1.3 fois l'allongement du matériau polymérique d'enrobage en contact, ces allongements étant parallèles au retournement. Pour le pneumatique selon l'invention, l'allongement du matériau polymérique de transition 28, dans la zone de sensibilité à la fissuration sur la face axialement extérieure du retournement 21b, est égal à 1.1 fois l'allongement du matériau polymérique d'enrobage. Par conséquent, la vitesse de propagation d'une fissure du matériau polymérique d'enrobage vers le matériau polymérique de transition 28, dans le cas de l'invention, est plus faible que la vitesse de propagation d'une fissure du matériau polymérique d'enrobage vers le matériau polymérique de bourrage 6, dans le cas du pneumatique de référence, car le ratio de l'allongement du matériau polymérique de transition 28 par rapport à l'allongement du matériau polymérique d'enrobage, égal à 1.1, est inférieur au ratio de l'allongement du matériau polymérique de bourrage 6 par rapport à l'allongement du matériau polymérique d'enrobage, égal à 1.3.

L'invention ne doit pas être interprétée comme étant limitée à l'exemple illustré sur la figure 2 mais peut être étendue à d'autres variantes de réalisation, telles que, par exemple et de manière non exhaustive, relatives au nombre de matériaux polymériques de transition compris entre le matériau polymérique d'enrobage et le matériau polymérique de bourrage.

## Revendications

1. Pneumatique pour véhicule lourd de type génie civil comprenant deux bourrelets destinés à entrer en contact avec une jante comprenant deux rebords de jante (7, 27) au moins en partie circulaires, une armature de carcasse comprenant au moins une couche d'armature de carcasse (1, 21) constituée d'éléments de renforcement métalliques enrobés par un matériau polymérique d'enrobage, la couche d'armature de carcasse comprenant une partie principale (1a, 21a) s'enroulant dans chaque bourrelet, de l'intérieur vers l'extérieur du pneumatique, autour d'une tringle (2, 22) pour former un retournement (1b, 21b), la distance (a) entre le retournement (1b, 21b) et la partie principale (1a, 21a) décroissant continûment, radialement vers l'extérieur, à partir d'une tringle (2, 22), jusqu'à une distance minimale (a₁), puis augmentant continûment jusqu'à une distance maximale (a₂), chaque bourrelet comprenant un élément de protection (4, 24) prolongeant radialement vers l'intérieur un flanc (5, 25) et un élément de bourrage (6, 26) axialement intérieur à l'élément de protection et au flanc et axialement extérieur au retournement, les éléments de protection et de bourrage étant respectivement constitués d'au moins un matériau polymérique de protection et d'un matériau polymérique de bourrage, où un élément de transition (28), constitué d'un matériau polymérique de transition, est en contact, par sa face axialement intérieure, avec le matériau polymérique d'enrobage de la face axialement extérieure du retournement (21b) et, par sa face axialement extérieure, avec le matériau polymérique de bourrage (26), **caractérisé en ce que** le matériau polymérique de bourrage a un module d'élasticité à 10% d'allongement inférieur au module d'élasticité à 10% d'allongement du matériau polymérique d'enrobage **et en ce que** le module d'élasticité à 10% d'allongement du matériau polymérique de transition est intermédiaire entre les modules d'élasticité à 10% d'allongement respectifs du matériau polymérique d'enrobage et du matériau polymérique de bourrage.

2. Pneumatique pour véhicule lourd de type génie civil selon la revendication 1, **caractérisé en ce que** l'extrémité radialement extérieure (E) de l'élément de transition (28) est radialement extérieure à la droite (Dmin) passant par le centre (O) du cercle du rebord de jante (27) et faisant un angle de +70° par rapport à la direction axiale (YY').

3. Pneumatique pour véhicule lourd de type génie civil selon l'une quelconque des revendications 1 ou 2, **caractérisé en ce que** l'extrémité radialement intérieure (I) de l'élément de transition (28) est radialement intérieure à la droite (dmax) passant par le centre (O) du cercle du rebord de jante (27) et faisant un angle de +40° par rapport à la direction axiale (YY').

4. Pneumatique pour véhicule lourd de type génie civil selon l'une quelconque des revendications 1 à 3, **caractérisé en ce que** l'épaisseur (e) de l'élément de transition (28) est au moins égale à l'épaisseur du matériau polymérique d'enrobage.

5. Pneumatique pour véhicule lourd de type génie civil selon l'une quelconque des revendications 1 à 4, **caractérisé en ce que** l'épaisseur (e) de l'élément de transition (28) est au plus égale à 5 fois l'épaisseur du matériau polymérique d'enrobage.

6. Pneumatique pour véhicule lourd de type génie civil selon l'une quelconque des revendications 1 à 5, **caractérisé en ce que** le module d'élasticité à 10% d'allongement du matériau polymérique de transition est au moins égal à 0.9 fois et au plus égal à 1.1 fois la moyenne arithmétique des modules d'élasticité à 10% d'allongement respectifs du matériau polymérique d'enrobage et du matériau polymérique de bourrage.

7. Pneumatique pour véhicule lourd de type génie civil selon l'une quelconque des revendications 1 à 6, **caractérisé en ce que** la distance maximale (a₂) entre le retournement (21b) et la partie principale (21a) est au moins égale à 1.1 fois la distance minimale (a₁) entre le retournement (21b) et la partie principale (21a).

8. Ensemble monté comprenant un pneumatique pour véhicule lourd de type génie civil selon l'une quelconque des revendications 1 à 7, et une jante (27), le pneumatique étant monté sur la jante (27), et comprenant un point A du retournement (21b), positionné à la distance minimale (a₁), axialement à l'extérieur de la partie principale (21a), et à une distance (H_{A}), radialement à l'extérieur d'une ligne de référence (S) de la jante (27), le point F le plus radialement extérieur de la jante (27) étant positionné à une distance (H_{F}), radialement à l'extérieur d'une ligne de référence (S) de la jante (27), **caractérisé en ce que** la distance (H_{A}) du point A du retournement (21b), positionné à la distance minimale (a₁) axialement à l'extérieur de la partie principale (21a), à la ligne de référence (S) de la jante (27) est au moins égale à 1.25 fois et au plus égale à 2.5 fois la distance (H_{F}) du point F le plus radialement extérieur de la jante (27) à la ligne de référence (S) de la jante (27).

9. Ensemble monté comprenant un pneumatique pour véhicule lourd de type génie civil selon l'une quelconque des revendications 1 à 7, et une jante (27), le pneumatique étant monté sur la jante (27), et comprenant un point B du retournement (21b), positionné à la distance maximale (a₂), axialement à l'extérieur de la partie principale (21a), et à une distance (H_{B}), radialement à l'extérieur d'une ligne de référence (S) de la jante (27), le point F le plus radialement extérieur de la jante (27) étant positionné à une distance (H_{F}), radialement à l'extérieur d'une ligne de référence (S) de la jante (27), **caractérisé en ce que** la distance (H_{B}) du point B du retournement (21b), positionné à la distance maximale (a₂) axialement à l'extérieur de la partie principale (21a), à la ligne de référence (S) de la jante (27) est au moins égale à 2 fois et au plus égale à 4 fois la distance (H_{F}) du point F le plus radialement extérieur de la jante (27) à la ligne de référence (S) de la jante (27).

## Patentansprüche

1. Luftreifen für ein Bauschwerfahrzeug, der zwei Wulste, die dazu bestimmt sind, mit einer Felge in Kontakt zu gelangen, und zwei Felgenkanten (7, 27), die wenigstens teilweise kreisförmig sind, aufweisen, und eine Karkassenbewehrung, die wenigstens eine Karkassenbewehrungsschicht (1, 21) enthält, die aus metallischen Verstärkungselementen gebildet ist, die von einem Polymerumhüllungsmaterial umhüllt sind, umfasst, wobei die Karkassenbewehrungsschicht einen Hauptteil (1a, 21a), der sich in jedem Wulst von der Innenseite zur Außenseite des Luftreifens um ein Seil (2, 22) erstreckt, um eine Umbiegung (1b, 21b) zu bilden, wobei der Abstand (a) zwischen der Umbiegung (1b, 21b) und dem Hauptteil (1a, 21a) radial von außen ausgehend von dem Seil (2, 22) bis zu einem minimalen Abstand (a₁) kontinuierlich abnimmt und dann bis zu einem maximalen Abstand (a₂) kontinuierlich zunimmt, wobei jeder Wulst ein Schutzelement (4, 24), das von innerhalb einer Seitenfläche (5, 25) radial verlängert ist, und ein Füllelement (6, 26) axial innerhalb des Schutzelements und der Seitenfläche und axial außerhalb der Umbiegung umfasst, wobei das Schutzelement und das Füllelement aus wenigstens einem Schutzpolymermaterial bzw. aus einem Füllpolymermaterial gebildet sind, wobei ein Übergangselement (28), das aus einem Übergangspolymermaterial gebildet ist, mit seiner axial inneren Fläche mit dem Umhüllungspolymermaterial der axial äußeren Fläche der Umbiegung (21b) in Kontakt ist und mit seiner axial äußeren Fläche mit dem Füllpolymermaterial (26) in Kontakt ist, **dadurch gekennzeichnet, dass** das Füllpolymermaterial einen Elastizitätsmodul mit 10 % Dehnung, der kleiner als der Elastizitätsmodul mit 10 % Dehnung des Umhüllungspolymermaterials ist, besitzt und dass der Elastizitätsmodul mit 10 % Dehnung des Übergangspolymermaterials zwischen den jeweiligen Elastizitätsmodulen mit 10 % Dehnung des Umhüllungspolymermaterials bzw. des Füllpolymermaterials liegt.

2. Luftreifen für Bauschwerfahrzeug nach Anspruch 1, **dadurch gekennzeichnet, dass** sich das radial äußere Ende (E) des Übergangselements (28) radial außerhalb der Geraden (Dmin) befindet, die durch das Zentrum (O) des Kreises der Felgenkante (27) verläuft und mit der axialen Richtung (YY') einen Winkel von +70° bildet.

3. Luftreifen für Bauschwerfahrzeug nach einem der Ansprüche 1 oder 2, **dadurch gekennzeichnet, dass** sich das radial innere Ende (I) des Übergangselements (28) radial innerhalb der Geraden (dmax) befindet, die durch das Zentrum (O) des Kreises der Felgenkante (27) verläuft und mit der axialen Richtung (YY') einen Winkel von +40° bildet.

4. Luftreifen für Bauschwerfahrzeug nach einem der Ansprüche 1 bis 3, **dadurch gekennzeichnet, dass** die Dicke (e) des Übergangselements (28) wenigstens gleich der Dicke des Füllpolymermaterials ist.

5. Luftreifen für Bauschwerfahrzeug nach einem der Ansprüche 1 bis 4, **dadurch gekennzeichnet, dass** die Dicke (e) des Übergangselements (28) höchstens gleich der fünffachen Dicke des Umhüllungspolymermaterials ist.

6. Luftreifen für Bauschwerfahrzeug nach einem der Ansprüche 1 bis 5, **dadurch gekennzeichnet, dass** der Elastizitätsmodul mit 10 % Dehnung des Übergangspolymermaterials wenigstens gleich dem 0,9-Fachen und höchstens gleich dem 1,1-Fachen des arithmetischen Mittels der Elastizitätsmodule mit 10 % Dehnung des Umhüllungspolymermaterials bzw. des Füllpolymermaterials ist.

7. Luftreifen für Bauschwerfahrzeug nach einem der Ansprüche 1 bis 6, **dadurch gekennzeichnet, dass** der maximale Abstand (a₂) zwischen der Umbiegung (21b) und dem Hauptteil (21a) wenigstens gleich dem 1,1-fachen minimalen Abstand (a₁) zwischen der Umbiegung (21b) und dem Hauptteil (21a) ist.

8. Montagegesamtheit, die einen Luftreifen für Bauschwerfahrzeug nach einem der Ansprüche 1 bis 7 und eine Felge (27) umfasst, wobei der Luftreifen an der Felge (27) montiert ist und einen Punkt A der Umbiegung (21b) aufweist, der bei dem minimalen Abstand (a₁) axial außerhalb des Hauptteils (21a) und bei einem Abstand (H_{A}) radial außerhalb der Bezugslinie (S) der Felge (27) positioniert ist, wobei der radial äußerste Punkt (F) der Felge (27) in einem Abstand (H_{F}) radial außerhalb einer Bezugslinie (S) der Felge (27) positioniert ist, **dadurch gekennzeichnet, dass** der Abstand (H_{A}) des Punkts A der Umbiegung (21b), der in einem minimalen Abstand (a₁) axial außerhalb des Hauptteils (21a) zu der Bezugslinie (S) der Felge (27) positioniert ist, wenigstens gleich dem 1,25-Fachen und höchstens gleich dem 2,5-Fachen des Abstands (H_{F}) des radial äußersten Punkts F der Felge (27) zu der Bezugslinie (S) der Felge (27) positioniert ist.

9. Montagegesamtheit, die einen Luftreifen für Bauschwerfahrzeug nach einem der Ansprüche 1 bis 7 und eine Felge (27) umfasst, wobei der Luftreifen an der Felge (27) montiert ist und einen Punkt B der Umbiegung (21b) aufweist, der in dem maximalen Abstand (a₂) axial außerhalb des Hauptteils (21a) und in einem Abstand (H_{B}) radial außerhalb einer Bezugslinie (S) der Felge (27) positioniert ist, wobei der radial äußerste Punkt F der Felge (27) in einem Abstand (H_{F}) radial außerhalb einer Bezugslinie (S) der Felge (27) positioniert ist, **dadurch gekennzeichnet, dass** der Abstand (H_{B}) des Punkts B der Umbiegung (21b), der in dem maximalen Abstand (a₂) axial außerhalb des Hauptteils (21a) zu der Bezugslinie (S) der Felge (27) positioniert ist, wenigstens gleich dem 2-fachen und höchstens gleich dem 4-fachen Abstand (H_{F}) des radial äußersten Punkts F der Felge (27) zu der Bezugslinie (S) der Felge (27) ist.

## Claims

1. Tyre for a heavy vehicle of construction plant type, comprising two beads intended to come into contact with a rim comprising two rim flanges (7, 27), which are at least partially circular, a carcass reinforcement comprising at least one carcass reinforcing layer (1, 21) made up of metal reinforcing elements coated in a coating polymer material, the carcass reinforcing layer comprising a main part (1a, 21a) wrapping, in each bead, from the inside towards the outside of the tyre, around a bead wire (2, 22) to form a turn-up (1b, 21b), the distance (a) between the turn-up (1b, 21b) and the main part (1a, 21a) decreasing continuously, radially towards the outside, from a bead wire (2, 22) out to a minimum distance (a₁), then increasing continuously up to a maximum distance (a₂), each bead comprising a protective element (4, 24) extending a sidewall (5, 25) radially towards the inside, and a filling element (6, 26) axially on the inside of the protective element and of the sidewall and axially on the outside of the turn-up, the protective and filling elements being respectively made of at least one protective polymer material and one filling polymer material, in which a transition element (28) made of a transition polymer material, is in contact, via its axially interior face, with the coating polymer material of the axially exterior face of the turn-up (21b) and, by its axially exterior face, with the filling polymer material (26), **characterized in that** the filling polymer material has an elastic modulus at 10% elongation that is less than the elastic modulus at 10% elongation of the coating polymer material and **in that** the elastic modulus at 10% elongation of the transition polymer material is somewhere between the respective elastic moduluses at 10% elongation of the coating polymer material and of the filling polymer material.

2. Tyre for a heavy vehicle of construction plant type according to Claim 1, **characterized in that** the radially outer end (E) of the transition element (28) is radially on the outside of the straight line (Dmin) passing through the centre (O) of the circle of the rim flange (27) and making an angle of +70° with respect to the axial direction (YY').

3. Tyre for a heavy vehicle of construction plant type according to either one of Claims 1 and 2, **characterized in that** the radially inner end (I) of the transition element (28) is radially on the inner side of the straight line (dmax) passing through the centre (O) of the circle of the rim flange (27) and making an angle of +40° with respect to the axial direction (YY').

4. Tyre for a heavy vehicle of construction plant type according to any one of Claims 1 to 3, **characterized in that** the thickness (e) of the transition element (28) is at least equal to the thickness of the coating polymer material.

5. Tyre for a heavy vehicle of construction plant type according to any one of Claims 1 to 4, **characterized in that** the thickness (e) of the transition element (28) is at most equal to five times the thickness of the coating polymer material.

6. Tyre for a heavy vehicle of construction plant type according to any one of Claims 1 to 5, **characterized in that** the elastic modulus at 10% elongation of the transition polymer material is at least equal to 0.9 times and at most equal to 1.1 times the arithmetic mean of the respective elastic moduluses at 10% elongation of the coating polymer material and of the filling polymer material.

7. Tyre for a heavy vehicle of construction plant type according to any one of Claims 1 to 6, **characterized in that** the maximum distance (a₂) between the turn-up (21b) and the main part (21a) is at least equal to 1.1 times the minimum distance (a₁) between the turn-up (21b) and the main part (21a).

8. Mounted assembly comprising a tyre for a heavy vehicle of construction plant type according to any one of Claims 1 to 7, and a rim (27), the tyre being mounted on the rim (27) and comprising a point A of the turn-up (21b) that is positioned at the minimum distance (a₁), axially on the outside of the main part (21a), and at a distance (H_{A}) radially on the outside of a reference line (S) of the rim (27), the radially outermost point F of the rim (27) being positioned at a distance (H_{F}) radially on the outside of a reference line S of the rim (27), **characterized in that** the distance (H_{A}) from the point A of the turn-up (21b) that is positioned at the minimum distance (a₁) axially on the outside of the main part (21a) to the reference line (S) of the rim (27) is at least equal to 1.25 times and at most equal to 2.5 times the distance (H_{F}) from the radially outermost point F of the rim (27) to the reference line (S) of the rim (27).

9. Mounted assembly comprising a tyre for a heavy vehicle of construction plant type according to any one of Claims 1 to 7, and a rim (27), the tyre being mounted on the rim (27) and comprising a point B of the turn-up (21b) that is positioned at the maximum distance (a₂) axially on the outside of the main part (21a) and at a distance (H_{B}) radially on the outside of a reference line (S) of the rim (27), the radially outermost point F of the rim (27) being positioned at a distance (H_{F}), radially on the outside of a reference line (S) of the rim (27), **characterized in that** the distance (H_{B}) from the point B of the turn-up (21b), positioned at the maximum distance (a₂) axially on the outside of the main part (21a), to the reference line (S) of the rim (27) is at least equal to 2 times and at most equal to 4 times the distance (H_{F}) from the radially outermost point F of the rim (27) to the reference line (S) of the rim (27).
